# EUROPEAN PATENT SPECIFICATION

(11) **EP 3 359 114 B1**
(45) Date of publication and mention of the grant of the patent: **04.12.2019**
(21) Application number: 16791136.1
(22) Date of filing: 05.10.2016
(51) Int. Cl.: A61J 1/03, B65D 75/36, B65D 75/32, B65B 57/10

(54) **CONNECTED PHARMACEUTICAL PACKAGING**
VERBUNDENE PHARMAZEUTISCHE VERPACKUNG
EMBALLAGE PHARMACEUTIQUE CONNECTÉ

(30) Priority: 09.10.2015 US 201514879874; 01.06.2016 US 201615170121
(43) Date of publication of application: 15.08.2018
(73) Proprietor: Quantaed, LLC, San Diego, California 92130 (US)
(72) Inventor: MEHREGANY, Mehran, San Diego, California 92127 (US)
(74) Representative: Blumbach · Zinngrebe Patentanwälte PartG mbB
(86) International application number: PCT/US2016/055535
(87) International publication number: WO 2017/062480

(56) References cited:
- US-A1- 2012 056 000
- US-A1- 2014 055 267
- US-A1- 2014 251 850

## Description

### Cross Reference to Related Applications

This case is a continuation-in-part of U.S. Patent Application No. 14/879,874, filed October 9, 2015 (Attorney Docket: 3005-002US1), which claims priority of U.S. Provisional Patent Application Serial Number 62/062,291, filed October 10, 2014 (Attorney Docket: 3005-002PR1) and U.S. Provisional Patent Application Serial Number 62/137,988, filed March 15, 2015 (Attorney Docket: 3005-003PR1). This case also claims priority of U.S. Provisional Patent Application Serial Number 62/320,234, filed April 8, 2016 (Attorney Docket: 3005-004PR1).

### Field of the Invention

The present invention relates to packaging in general, and, more particularly, to smart packaging. Such an apparatus and method is disclosed in the US20140055267.

### Background of the Invention

The term "packaging" refers to the collection of different components that surround a product from the time of its production until its use. It typically serves many purposes, often simultaneously, such as providing protection from physical damage during shipping and handling, theft deterrence, providing protection from electrical damage due to electrostatic discharge, *etc.,* inhibiting product degradation, and the like.

Medical packaging, such as packaging for pharmaceutical products, *etc.,* has additional, typically more stringent requirements. For example, in addition to the above, medical packaging must also prevent tampering, inhibit contamination, hinder microbial growth, and ensure product safety through the intended shelf life for the medicine. Still further, medicine must also typically be packaged in such a way that the packaging inhibits accidental ingestion, such as by a child, which can lead to injury or death.

Recent technology development has enabled the addition of a level of intelligence to many packages. So-called "smart" packages (a.k.a., "connected packaging") include electronics that can be used to detect product removal, monitor the state of the package, and even send messages about the state of the product. Smart packaging is particularly attractive for medical packaging, where it can improve patient compliance by alerting a healthcare professional or care giver if a dose has been missed or taken too soon. In some cases, a smart package can even issue alerts to indicate product expiration, exposure to excess heat, unanticipated access to the medicine (*e.g.*, opening by a child, *etc*.), and the like.

Medication non-compliance is a costly problem in many ways, from driving up health care costs, to financial losses to the pharmaceutical industry, to serious negative human impacts. According to Kripalani, et al., in a study entitled "Interventions to enhance medication adherence in chronic medical conditions: a systematic review," Archives of Internal Medicine, Vol. 167, pp. 540-550 (2007), between 20 and 50 percent of patients do not adhere to their medication regimens and, therefore, do not receive the medicine they have been prescribed. As a result of such non-compliance, it is estimated that approximately 125,000 people die each year. In addition to the human cost, non-compliance has an economic cost, leading to an estimated $564 billion annually, or 59% of the $956 billion in total global pharmaceutical revenue in 2011.

By including embedded monitoring systems, connected packaging can help combat adherence challenges, thereby improving drug efficacy and outcomes, among other advantages. In addition, improved patient compliance enables a caregiver to better measure the effectiveness of the prescribed medication, thereby enabling them to improve outcomes by altering or augmenting treatment. This also can enable the caregiver better target drug delivery means (*e.g.,* tablets, liquids, inhalers, patches, *etc*.) and optimize or personalize the dosage prescribed.

In addition to enabling improved treatment of the individual patient, connected packaging enables better and more confident collection and analysis of patient data, which can benefit the drug industry and patients at-large by extending drug intellectual property, opening new markets, creating or improving drug-delivery mechanisms, shortening clinical trials due to collect a greater amount of more-relevant, higher-quality data, reducing the burdens on clinical trial patients (*e.g*., reduced travel, *etc*.), and providing real-time feedback on how a clinical trial is progressing. Still further, connected packaging promises improved medical diagnostics, which can improve opportunities for discovery of new indications for existing drugs, new candidates for drug treatment, and the like.

Connected drug packaging, therefore, can have positive implications for the entirety of a drug's life cycle from research through production to consumption.

Many medications come in a blister pack, particularly outside of the United States. A conventional medical blister-pack typically includes a formable layer, containing a plurality of tablet reservoirs, and a thin layer, referred to a lidding seal, that is attached to the formable layer to seal each tablet in its reservoir. To dispense a tablet from a blister pack, its reservoir is pushed inward, which forces the tablet through the lidding seal, thereby creating a permanent deformation of the lidding seal layer each and every time a tablet is removed. The most common blister-pack-based smart packaging approach relies on patterned electrical traces formed on the lidding seal, where a separate trace is disposed over each tablet reservoir. Electronic circuitry monitors the resistance of each trace and detects an infinite resistance for each trace that is broken.

Unfortunately, such conductive-trace-based approaches are limited to blister-pack-based packages while many medicines are often packaged in other ways. In fact, the most common pharmaceutical package is still the simple medicine bottle, which is used for pharmaceuticals in forms that range from liquids to loose tablets. Such packaging requires more complicated approaches for adding intelligence. For example, one prior-art approach relies on optical monitoring of tablets within a medicine bottle. The need to include active optical sources, as well as detectors, significantly increases packaging costs, however. Further, such devices are notoriously power hungry, which shortens the life of a battery used to power them.

A far simpler prior-art bottle-based approach employs a load-cell in a unit that holds the bottle. The load-cell provides an output signal indicative of the weight of the medicine remaining within the bottle, thereby enabling detection of a change in that amount. While simple and straight-forward, such an approach is limited to detecting only quantity of medicine and relies on the patient to return the bottle to the unit. Further, its output can be compromised by any inadvertent material that accidently winds up in contact with the bottle or the unit.

A smart-packaging approach that is capable, reliable, and applicable to product packaging other than blister packs would be a welcome advance for the pharmaceutical industry.

### Summary of the Invention

The present invention as further disclosed in claims 1 and 8, enables tracking of a product, such as drugs, medication, foodstuffs, consumer electronics, batteries, *etc.,* from production to consumption through connected packaging. Embodiments of the present invention are operative for wirelessly reporting medication adherence, environmental exposure (*e.g*., temperature), tampering, and theft. Embodiments of the present invention are particularly well suited for use with pharmaceutical products packaged in medicine bottles.

An embodiment of the present invention is a monitoring system that comprises a liner and associated electronics operative for imaging the content of a medicine container (*i.e.,* medicine bottle) using electrical capacitance tomography and using a series of images of the content to monitor the state of the content over time. The liner comprises a plurality of electrodes that are arranged and interconnected so to image the three-dimensional volume of the container at high resolution. In an illustrative embodiment, the liner dimensioned and arranged such that it can be inserted into the interior of the medicine bottle to be monitored. The liner is flexible, thereby enabling it to substantially conform to the interior surface of the medicine bottle without consuming a significant portion of the interior volume of the bottle.

In some embodiments, the liner includes a central pedestal that comprises a plurality of electrodes. In some such embodiments, the electronics are located in or on the pedestal.

In some embodiments, the electrodes include a common ground. In some embodiments, the common ground is a ground plane. In some embodiments, the ground plane is dimensioned and arranged to act as a shield that mitigates electrical coupling between the electrodes and influences from outside the connected package (*e.g*., a hand holding the package, *etc*.).

In some embodiments, the liner is designed to accept a medicine bottle such that, when so arranged, the electrodes of the liner are located outside the medicine bottle.

In some embodiments, the liner is dimensioned and arranged such that it images only a portion of the volume of the medicine bottle and leaves a portion of the medicine bottle exposed so as to make printing/labeling on the medicine bottle visible.

In some embodiments, the liner and medicine label are integrated by forming the electrodes and traces on the back of the medicine label itself (*e.g*., by printing them using conductive ink, forming them via thin-film processing, *etc*.), thereby forming a label that is a liner that accepts a medicine bottle.

An embodiment of the present invention is an apparatus for monitoring a content of a chamber of a medicine bottle, the apparatus comprising: a liner that comprises a first plurality of electrodes, the liner being dimensioned and arranged to locate the plurality of electrodes such that they are electrically coupled with the content of the chamber; and electronic circuitry that is operative for (1) providing a stimulus between a first electrode and second electrode of the first plurality thereof and (2) measuring a plurality of signals at a second plurality of electrodes, wherein the first plurality of electrodes includes the first electrode, second electrode, and the second plurality of electrodes, and wherein the second plurality of electrodes excludes the first electrode and second electrode.

Another embodiment of the present invention is a method for monitoring a content of a chamber of a medicine bottle, as further disclosed in claim 8, the method comprising: generating a first signal at a first time such that the first signal interacts with the content; receiving a plurality of second signals at a plurality of locations that are arranged around at least a portion of the chamber, wherein each of the plurality of second signals is based on the content of the chamber at the first time and the location of the plurality thereof at which it is received; generating a first map of a first characteristic of the content based on the plurality of second signals; and determining a first quantity of the content within the chamber at the first time based on the first map.

### Brief Description of the Drawings

FIGS. 1A-B depict schematic drawings of cross-sectional side and top views, respectively, of a "smart" medicine bottle in accordance with an illustrative embodiment of the present invention.
FIG. 2 depicts operations of a method for monitoring the content of a container via ECT in accordance with the illustrative embodiment of the present invention.
FIG. 3 depicts a schematic drawing of a cross-sectional side view of a smart bottle in accordance with a first alternative embodiment of the present invention.
FIG. 4 depicts a schematic drawing of a cross-sectional view of an ECT medicine-imaging system in accordance with a second alternative embodiment of the present invention.
FIGS. 5A-B depict schematic drawings of cross-sectional side and top views, respectively, of a "smart" medicine bottle in accordance with a third alternative embodiment of the present invention.
FIG. 6 depicts a schematic drawing of cross-sectional side view of a "smart" medicine bottle in accordance with a fourth alternative embodiment of the present invention.
FIG. 7 depicts a schematic drawing of cross-sectional side view of a "smart" medicine bottle in accordance with a fifth alternative embodiment of the present invention.

### Detailed Description

This patent application is a continuation-in-part of parent patent application U.S. Application No. 14/879,874, which discloses the application of electrical impedance tomography (EIT) to blister-pack-based packaging.

Blister packs are used globally for unit-dose packaging of pills, capsules, lozenges, *etc.* They protect medication from environmental factors such as humidity, oxidation, light, contamination, and (to some degree) tampering. In the United States, however, pills, capsules, and the like are often repackaged/dispensed at the pharmacy and delivered to the patient in a medicine bottle or similar container. Unfortunately, EIT imaging techniques cannot usually be used directly to image the content of a medicine bottle because it typically comprises dielectric materials (*i.e.,* electrically nonconductive tablets, liquids, air, *etc*.).

It is an aspect of the present invention, however, that a variation of the EIT technique, referred to as Electrical Capacitance Tomography (ECT) is well suited for imaging content comprising dielectric material, such as tablets, air, medicinal liquids, gels, and the like, and can be employed to image the content of medicine bottles (as well as other non-pharmaceutical packages) even when that content is dielectric in nature.

Embodiments of the present invention are afforded significant advantages over connected-packaging systems of the prior art because the present invention does not require disruption of conventional pharmaceutical package manufacturing processes, which are well established. Over the years, there has been tremendous capital investment made toward improving and advancing these processes, and they are considered substantially optimized. Connected-packaging solutions that require modification of the current package manufacturing processes would be, therefore, less attractive and likely met with resistance by the pharmaceutical packaging industry.

The present invention is directed, in part, to connected-packaging solutions for pharmaceuticals, with a focus on medicine containers comprising medicine bottles. For the purposes of this Specification, including the appended claims, the term **"medicine bottle"** is defined to mean any and all variety of vessels comprising a chamber suitable for containing medication. It should be noted, however, that embodiments of the present invention can be directed to myriad applications, including non-pharmaceutical-packaging applications.

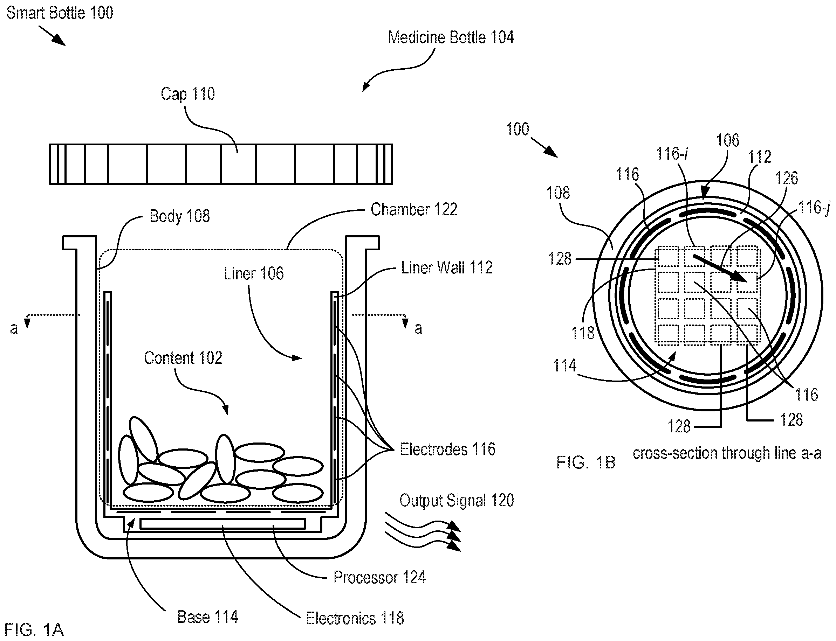

FIGS. 1A-B depict schematic drawings of cross-sectional side and top views, respectively, of a "smart" medicine bottle in accordance with an illustrative embodiment of the present invention. FIG. 1B depicts a cross-sectional view through line a-a as indicated in FIG. 1A. Smart bottle **100** is a connected-packaging container for holding content **102** and protecting it from environmental damage, tampering, and the like. Smart bottle **100** includes medicine bottle **104** and liner **106.**

Content **102** is a plurality of tablets comprising compressed-powder that includes medicine. For the purposes of this Specification, including the appended claims, the term "content" is used to represent any form pharmaceutical product including, without limitation, tablets, pills, capsules, gel-caps, powder, fluids, gels, and the like. In the depicted example, the content of the chamber of medicine bottle **104** includes tablets and air, both of which comprise dielectric materials. One skilled in the art will recognize, after reading this Specification, that pills, for example, are normally made of substantially dry power, which is a material suitable for ECT imaging as disclosed herein. In similar fashion, gel capsules comprise fluids contained within gelatin-based shells that are typically made from dielectric materials. The fluids are also often dielectric, but can still be imaged by ECT even if they have finite conductivity. It should be noted that when medicine bottle **104** includes contents that are a conductive fluid, EIT imaging techniques, such as those described in the parent application (*i.e.,* U.S. Application No. 14/879,874) can be used to image the fluid. In such embodiments, electrodes **116** would be exposed so that they can be in electrical contact with the fluid.

Medicine bottle **104** is a conventional medical bottle comprising body **108** and cap **110,** each of which is made of a pharmaceutical-produced-compatible polymer material, such as medical-grade plastic. Body **108** is formed such that it defines chamber **122,** which is an interior volume suitable for holding content **102.** In some embodiments, at least one of body **108** and cap **110** comprises a different material, such as glass, metal, composite materials, and the like. It should be noted that medicine bottle **104** is merely one example of myriad types of common pharmaceutical containers suitable for use with the present invention.

Liner **106** is an electrically active lining that is dimensioned and arranged to fit in medicine bottle **104.** Liner **106** includes liner wall **112,** base **114,** electrodes **116-1** through **116-N,** and electronics **118.** Liner **106** is typically formed using conventional flexible-electronics manufacturing methods.

Liner wall **112** and base **114** are formed from a solid sheet of flexible material suitable for use with pharmaceutical compounds. Materials suitable for liner wall **112** and base **114** include, without limitation, thermoplastic polymers, such as Polypropylene, Polyethylene terephthalate (PET), *etc.,* and the like. In some embodiments, liner wall **112** and base **114** are formed separately and joined afterward.

Each of electrodes **116-1** through **116-N** (electrodes **116-*i*,** where 1≤*i≤*N and N is any practical number - referred to, collectively, as electrodes **116**) is a thin-film electrode embedded within liner **106.** Electrodes **116** are distributed along liner wall **112** and across base **114.** Materials suitable for use in electrodes **116** include, without limitation, metals, conductive inks, conductive polymers, conductive paints, *etc.* Electrodes **116** are arranged within liner wall **112** such that they are electrically coupled with the content of chamber **122.** For the purposes of this Specification, including the appended claims, the term **"electrically coupled"** is defined to mean that an electrical signal generated or received by one or more electrodes is based on an interaction of the electrical signal with the content of the chamber. In the depicted example, electrodes **116** are distributed about the circumference and along the height of chamber **122** after liner **106** is inserted into the bottle. As a result, electrodes **116** are operative for imaging radial cross-sections of the interior of the medicine bottle, where the cross-sections collectively image the height of the medicine bottle interior.

In some embodiments, electrodes **116** and/or electronics **118** are fabricated on at least one of the inner and outer surfaces of liner **106.** When disposed on the inner wall of the liner, however, the electrode (and electronics) material must be compatible with the medication and sanitization processes (where necessary). When disposed on the outer wall surface, the electrode (and electronics) material must be durable so as to withstand damage due to wear and corrosion.

In some embodiments, electronic components (*e.g*., chips, resistors, capacitors, *etc*.) are mounted on a surface of the liner, in analogous fashion to mounting them on a printed circuit board. As a result, electronics provisions can be integrated onto/into the liner in locations that do not already incorporate electrodes/interconnects.

In some embodiments, base **114** does not include electrodes **116;** however, the inclusion of electrodes in the bottom of liner **106** provides for additional spatial imaging that can add detail when content **102** includes only a small amount of medication, such as when the dispensed medication is nearly gone or when there is only a small amount dispensed. These electrodes can also be used to determine the size of an individual pill, since even a single pill would rest on the bottom of the bottle.

It should be noted that the resolution of the imaging of the interior volume of medicine bottle **104** generally depends on the number, size, density and positioning of electrodes **116** for a given content and bottle size/shape. These parameters can be optimized to sense/count the number of individual tablets in chamber **122** or simply monitor the overall volume occupied by content **102** inside the chamber. In some embodiments, the number, size, density and positioning of electrodes **116** is based on a particular application objective. For example, if it is only necessary to determine when a refill is approaching or when the medication is exhausted, electrodes are only necessary in the bottom one-third portion medicine bottle **104.** In such cases, the height of liner **106** might be only one-third of the height of the interior volume of the bottle, or electrodes **116** might only populate the bottom one-third of a liner wall that extends along the full height of the bottle interior. In embodiments wherein it is desirable to be able to determine the size of an individual pill, preferably, the electrodes located on the bottom of liner **106** are small and numerous such that they form a dense electrode arrangement. In embodiments wherein it is desirable to image and/or count the number of pills coming out of the bottle, preferably, the electrodes near the top/lip of the liner **106** are small and numerous such that they form a dense electrode arrangement. One skilled in the art will recognize, after reading this Specification, there myriad permutations of liner configuration are within the scope of the present invention.

In some embodiments, liner **106** is reusable, which, in some cases, requires that liner wall **112** be cleanable.

It should be noted that, in the depicted example, the interior wall of body **108** and liner **106** are separated by a nominal gap for drawing clarity. Preferably, however, liner **106** fits snugly against the interior wall of the body (*i.e.,* there is minimal or no gap between them). Further, liners that are dimensioned and arranged to be inserted into a medicine bottle, such as liner **106,** are preferably used with medicine bottles having an opening and neck region that is at least as wide as its main body region (such as medicine bottle **104**) so that the liner can easily be inserted into the bottle.

It should be further noted that interconnect traces to the electrodes are also typically included in liner **106** (not shown for drawing simplicity). These interconnects are normally fabricated from the same conductive material layer as the electrodes, or fashioned from multiple conductive material levels through the thickness of liner wall **112.** The manner in which the interconnect traces and electrodes are fabricated is based upon real estate restrictions imposed by the electrode layout. For the purposes of this Specification, the term "electrodes **116"** is intended to encompass the requisite electrical interconnects between electrodes **116** and electronics **118.**

Electronics **118** includes electronic circuitry and/or electronic modules for enabling ECT imaging, wireless communication to and from smart bottle **100,** a processor (*i.e.,* processor **124)** for performing data and/or image processing necessary for generating a permittivity distribution within medicine bottle **104** and determining the amount of content **102,** and a memory cell for storing data, such as the number of tablets, patient history, chronology of medication events, and the like. In some embodiments, at least some of data/image processing and data storage is done at a system external to electronics **118,** such as a cellphone or computer system accessible by a caregiver, the patient, a pharmacy, a medical practitioner, and the like. In some embodiments, processor **124** is an external processor, such as a mobile device (*e.g.,* cell phone, tablet, laptop computer, *etc*.) or base station, which is in communication with electronic circuitry **118** via either of a wired or wireless communications link.

In the depicted example, electronics **118** are embedded in the bottom portion of medicine bottle **104;** however, in some embodiments, electronics **118** are located in another suitable place on liner **106.** Typically, electronics **118** also includes modules for signal processing/computation, memory and power (*e.g*., inductive, battery, ultrasonic, *etc*.). In some embodiments, an antenna is included in electronics **118** to enable wireless connectivity. In some embodiments, an antenna is formed in liner wall **112** during the formation of electrodes **116.** In some embodiments, electronics **118** includes local memory, in which this data is stored.

In some embodiments, electronics **118** includes additional modules for sensing motion and/or touch, removal of cap **110,** bottle orientation, and the like. For example, in some embodiments, motion- and/or touch sensing capability is used to extend battery life by energizing a wake-up circuit that enables ECT imaging only when the medicine bottle has been moved. Further, in some embodiments, predictive algorithms are employed with motion sensing to detect when the medicine bottle is opened and/or the orientation of the medicine bottle. Such additional information facilitates and/or augments the use of ECT to monitor medication-dispensing events.

It is preferable, although not required, that smart bottle **100** is untethered so that its use does not inconvenience the patient or caregiver. As a result, in the depicted example, the requisite electrical sensing and communication provisions are wireless and the medicine bottle is "self-reporting". The choice of wireless protocol is dominated primarily by power and cost requirements. Broadband/cellular communication is typically most preferable since it does not require a local/short-range gateway to connect to the network; however, it is also the most taxing in terms of power and cost. In some embodiments, short-range wireless protocols (*e.g*., Blue Tooth Low-Power, Near Field Communication, Inductive Coupling, *etc*.) are used to communicate with a local gateway (*e.g.,* patient's or caregiver's cell phone, custom gateway, etc.); however, such embodiments require that smart bottle **100** be located near the gateway.

In addition, low-power-consumption electronics are preferable to mitigate the need for on-board power. A power source in, or on, liner **106** is desirable for self-reporting. Minimizing power consumption also enables smaller batteries (both planar and height profiles), including perhaps thin film batteries. Batteries that can be recharged inductively would be convenient/advantageous, particularly if extended use or reuse of the liner is intended.

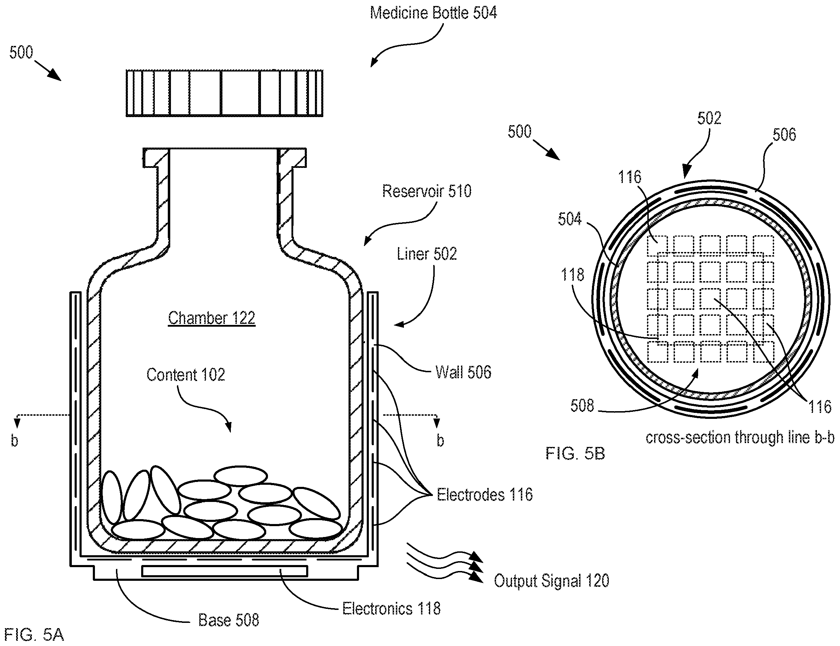

One skilled in the art will recognize, after reading this Specification, that, because electrodes **116** are located within medicine bottle **104,** body **108** can be made of dielectric materials, non-dielectric materials (*i.e.,* electrically conducting materials, such as metals, *etc.*), or combinations thereof. In some embodiments, however, it is desirable to locate electrodes **116** in a receptacle that accepts medicine bottle **104,** such that the electrodes are located outside body **108,** as discussed below and with respect to FIGS. 5-7. In such embodiments, body **108** must be made of dielectric material in order to enable ECT imaging of content of medicine bottle **104.** One skilled in the art will recognize that, in embodiments wherein body **108** is electrically conductive, data transmission to/from electrodes **116** is typically only possible when the bottle is open.

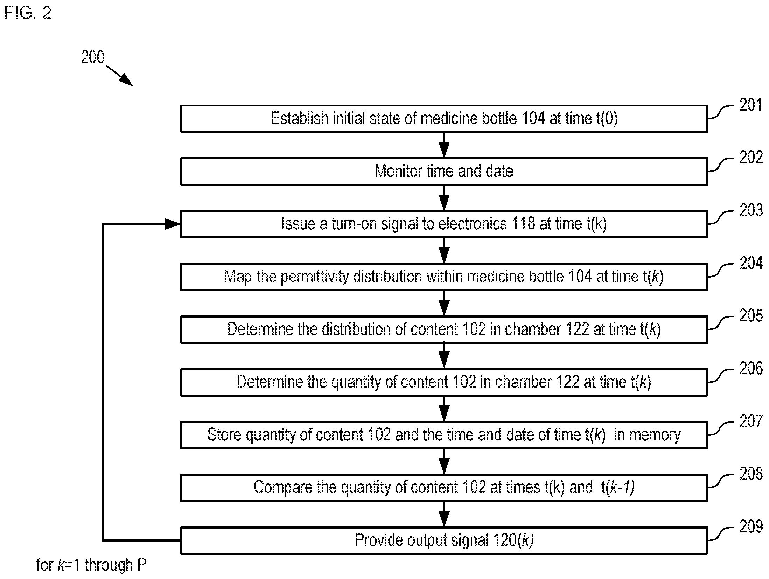

FIG. 2 depicts operations of a method for monitoring the content of a container via ECT in accordance with the illustrative embodiment of the present invention. Method **200** monitors the content of medicine bottle **104** by creating a map of the relative permittivity distribution throughout its interior volume and tracking any changes to that distribution.

It should be noted that ECT is fundamentally different from capacitive sensing between electrode pairs, such as is described in U.S. Patent No. 8754769. In capacitive sensing, a stimulus (*e.g*., current) is applied across a pair of electrodes, and a response (*e.g*., voltage) is measured across the same pair of electrodes. This stimulus/response measurement indicates an aggregate (or effective) permittivity between the two electrodes.

ECT, in contrast, determines the distribution of the content of a vessel by measuring the related permittivity distribution through the volume of the vessel. ECT is most successful when applied to materials of low electrical conductivity. The requisite capacitance measurements are achieved by using a plurality of conductive electrodes that surround the volume to be imaged, as depicted in FIGS. 1A-B. In one implementation, a cross section to be imaged is surrounded by one or more circumferential sets of electrodes and the electrical capacitances between all combinations of the electrodes within each set are measured. This information is then used to construct an image of the content of the cross section of the vessel enclosed by the electrodes, based on variations in the permittivity of the material inside the vessel.

Method **200** begins with optional operation **201,** wherein an initial state of medicine bottle **104** is established. The initial state is established at time t(0), which is typically the time at which the medication is dispensed. In some embodiments, the initial state is established by simply storing a tablet count in the memory module of electronics **118.** In some embodiments, the initial state is established via an ECT procedure, as discussed below and with respect to operations **203** through **205.**

At operation **202,** electronics **118** monitors date and time.

At operation **203,** for *k*=1 through P, a turn-on signal is issued to electronics **118** at time t(*k*) to initiate an interrogation of the volume of medicine bottle **104.** In the depicted example, the turn-on signal is an alarm generated by electronics **118** at a time that is based on the dosage schedule for content **102.** In some embodiments, the turn-on signal is generated at a time that is delayed slightly from the time at which a scheduled dose is due. In some embodiments, the turn-on signal is generated by another factor, such as motion of medicine bottle **104,** detection of the removal of cap **110,** receipt of a signal from an external source, such as a cell phone, monitoring system accessible to a caregiver, medical practitioner, *etc.,* and the like.

It should be noted that the value of P is typically based on the medication regimen associated with content **102.** For example, in the depicted example, P is equal to the number of tablets initially contained in medicine bottle **104.** In some embodiments, P is equal to the number of days over which the medication is supposed to be taken. In some embodiments, P is equal to another factor associated with the medicine regimen.

At operation **204,** a map of the permittivity distribution within the volume of medicine bottle **104** is generated at time t(*k*). The map of permittivity is developed by applying stimulus **126** (in the depicted example, AC current) between each pair of electrodes in the set of electrodes **116** and measuring response **128** (in the depicted example, AC voltage) at each other electrode in the set. For example, for each of *i*=1 through N and *j*=1 through N, where *i* and *j* are not equal, stimulus **126** is applied between electrodes **116-*i*** and **116-*j*** and responses **128** are measured at each of the other electrodes in the set. In other words, the stimulus/response is measured for all combinations of electrode pairs in the set of electrodes **116.** In some embodiments, the applied stimulus is an AC voltage and the measured response is an AC current. In yet other embodiments, a stimulus other than voltage or current is applied between electrodes **116-*i*** and **116-*j*** and a response other than current or voltage is measured at each of the other electrodes. One skilled in the art will recognize, after reading this Specification, that myriad strategies for stimulating and measuring electrical response at electrodes **116** are within the scope of the present invention. Examples of stimulation/measurement strategies applicable for EIT and ECT modelling in accordance with the present invention are described by Silva, et al., in "Influence of current injection pattern and electric potential measurement strategies in electrical impedance tomography," Control Engineering Practice (2016), as well as by Y. Yao, in "Wearable Sensor Scanner using Electrical Impedance Tomography," PhD Thesis, University of Bath (2012).

In some embodiments, electrodes **116** include a common ground from which the potential at each electrode measured is referenced. In some embodiments, this common ground is a ground plane. In some embodiments, the ground plane also acts as a shield to mitigate external influence on the measured electrical response at each electrode. For example, one skilled in the art will recognize, after reading this Specification, that a hand grasping a medicine bottle will perturb the measurements at the electrodes due to coupled capacitance. A ground plane that acts as a shield between the electrodes and the hand would mitigate such effects, however. In some embodiments, one or more of electrodes **116** comprise configurations that incorporate shielding lines as described in U.S. Provisional Patent Application Serial Number 62/320,234.

At operation **205,** the distribution of content **102** within chamber **122** is determined based upon the permittivity distribution map at t(*k*). In the depicted example, the distribution of the content indicates the number and types of tablets contained in medicine bottle **104.**

It should be noted that the dielectric constant of an individual tablet is based on its chemical makeup. As a result, the type of medication, dosage level, pill shape, and the like, affect the capacitance of each tablet. It is an aspect of the present invention, therefore, that the use of ECT can provide an indication of the types of tablets within chamber **122,** as well as the number of each type. As a result, the present invention enables, for example, determination of whether the bottle contains the correct medication or if an incorrect tablet or fluid has been used. It even enables detection that one or more improper tablets have been accidently included along with the correct tablets. This is in marked contrast to capacitive sensing, which can only measure an aggregate permittivity between the two electrodes and affords embodiments of the present invention with significant advantages over prior-art capacitive-sensing methods.

At operation **206,** the quantity of content **102** (*i.e.,* the number and type of tablets) is determined from their distribution within chamber **122.** It should be noted that electromagnetic and mathematical modeling techniques applicable to ECT imaging are well established and widely used in many industrial applications, for example, measuring the flow of fluids inside a pipe, concentration of one fluid in another or distribution of a solid in a fluid.

At operation **207,** the quantity of content **102** at time t(*k*), as well as the time and date of time t(*k*) are stored in memory. In some embodiments, this data is transmitted to an external memory system, such as a cellphone or monitoring system accessible by a caregiver, the patient, a pharmacy, a medical practitioner, and the like.

At operation **208,** electronics **118** compares the quantity of content **102** (*i.e.,* the number of tablets) at time t(*k*) to the quantity of content **102** determined at time t(*k*- 1).

At operation **209,** electronics **118** generates output signal **120(*k*),** which is indicative of the state of smart bottle **100,** typically denoting the correct amount of content **102** has been dispensed as scheduled, how much content was dispensed, the date and time at which the content was dispensed, and the like. In some embodiments, output signal **120(*k*)** includes additional information, such as any anomalies in the environmental conditions to which smart bottle **100** was subjected, *etc.,* a warning that the medication is nearly or entirely exhausted, a prompt for refilling the prescription for the medication, an identification code, the geographical location of smart bottle **100,** and the like.

In some embodiments, electronics **118** transmits an alarm in response to an unexpected stimuli, such as exposure to a temperature or humidity extreme, excessive shock, unscheduled access to medicine bottle **104,** which might indicate unauthorized access such as tampering, ingestion by a child, *etc.*

It should also be noted that, although the illustrative embodiment described above is directed to ECT imaging techniques, other imaging techniques, such as acoustic imaging, are also within the scope of the present invention. In acoustic-imaging-based embodiments, electrodes **116** (excluding interconnects) are replaced with a composite layer stack of thin-film conductor/piezoelectric/conductor materials to enable generation of acoustic waves and their detection after reflection from content **102,** where the reflection of the acoustic waves is based on the distribution of acoustic impedance within the content. Suitable piezoelectric materials would include, without limitation, polyvinylidene difluoride (PVDF), lead-zirconate titanate (PZT), zinc oxide (ZnO) and the like. PVDF is particularly attractive due to the fact that it is a strongly non-reactive and pure thermoplastic fluoropolymer derived from polymerization of vinylidene difluoride.

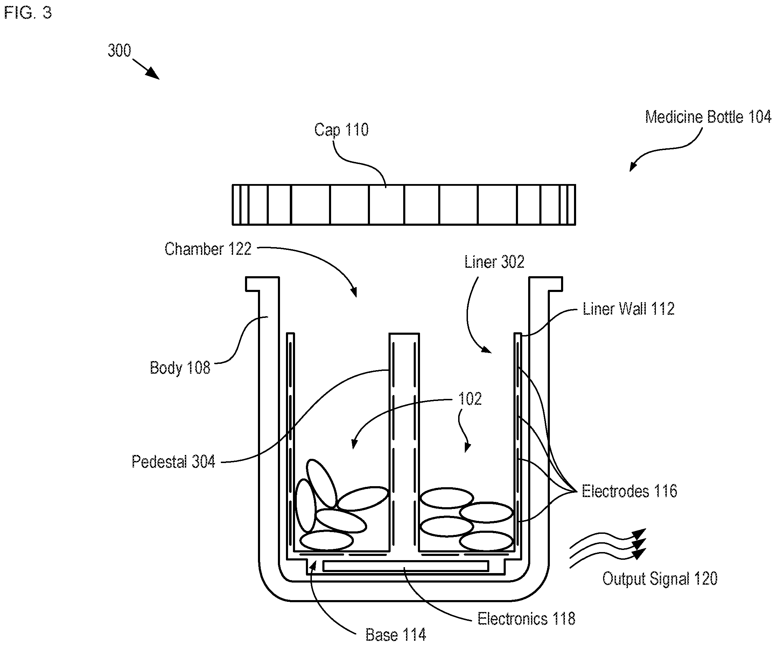

FIG. 3 depicts a schematic drawing of a cross-sectional side view of a smart bottle in accordance with a first alternative embodiment of the present invention. Smart bottle **300** comprises medicine bottle **104** and liner **302.** Smart bottle **300** is well suited for applications that require high-resolution imaging, such as when content **102** includes a large number of small tablets. System **300** is analogous to system **200;** however, liner **302** incorporates central pedestal **304** to enable a greater number of electrodes and, therefore, improved image resolution.

Liner **302** is analogous to liner **106,** as described above; however, liner **302** also includes pedestal **304,** which enable the inclusion of more electrodes **116** and, therefore, improved image resolution.

It should be noted that the area of liner wall **112** (and, therefore, the number of electrodes **116**) can be increased in myriad ways, such as by additional internally protruding features having any of a multiplicity of shapes, which are distributed strategically in the liner. In some embodiments, sub-volumes are created within the overall volume of the liner, thereby increasing the area of liner wall **112** and reducing imaging volume size. In some embodiments, the sub-volumes are designed to trap an individual tablet in order to measure its size independently. In such embodiments, it is possible that dead space can result. In some embodiments, electronics **118** are located within one of these sub-volumes, which represent dead-space regions.

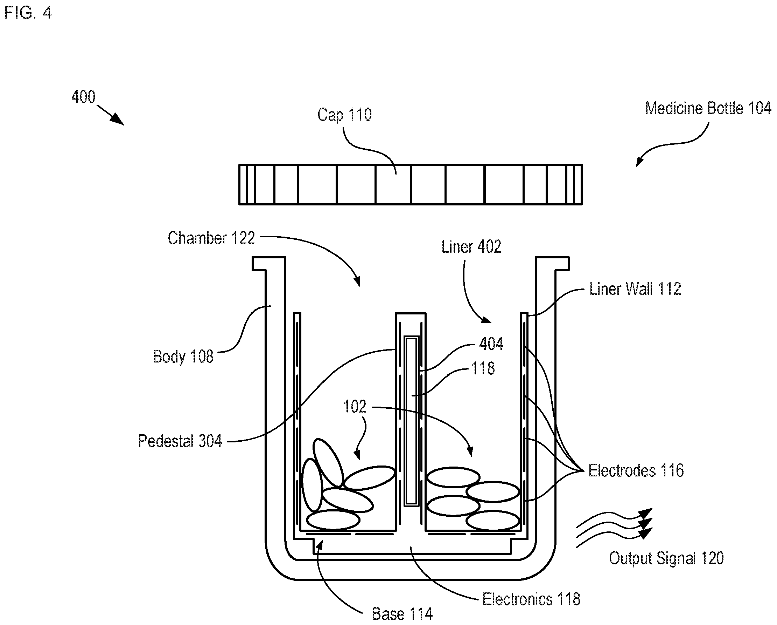

FIG. 4 depicts a schematic drawing of a cross-sectional view of an ECT medicine-imaging system in accordance with a second alternative embodiment of the present invention. Smart bottle **400** is analogous to smart bottle **300;** however, in smart bottle **400,** liner **402** includes dead-space region **404** within pedestal **304,** in which is located electronics **118.**

FIGS. 5A-B depict schematic drawings of cross-sectional side and top views, respectively, of a "smart" medicine bottle in accordance with a third alternative embodiment of the present invention. FIG. 5B depicts a cross-sectional view through line b-b as indicated in FIG. 5A. Smart bottle **500** comprises liner **502** and medicine bottle **504.** Smart bottle **500** is analogous to system **100;** however, in system **500,** electrodes **116** are located outside medicine bottle **504** when the bottle and liner are operatively coupled.

Medicine bottle **504** is analogous to medicine bottle **104** described above and with respect to FIGS. 1A-B; however, medicine bottle **504** has a neck region that is narrower than the remainder of its body.

Liner **502** is analogous to liner **106** described above; however, liner **502** is dimensioned and arranged to operate as a receptacle for locating medicine bottle **504** such that chamber **122** is surrounded by electrodes **116.** Liner **502** includes wall **506,** base **508,** electrodes **116,** and electronics **118.**

Typically, wall **506** and base **508** comprise a substantially rigid dielectric material, such as medical grade plastic, glass, and the like. Wall **506** and base **508** collectively define reservoir **510,** which is open at its upper end to enable it to receive medicine bottle **504.** In some embodiments, at least wall **506** comprises a flexible dielectric material such that liner **502** can substantially conform to the outer surface of body **108** (*e.g*., a plastic or paper label). In some embodiments, liner **502** is dimensioned and arranged to receive a medicine bottle having a different shape, such as medicine bottle **104,** and the like.

In some embodiments, liner **502** is dimensioned and arranged to provide additional assurance of attachment robustness to medicine bottle **104** for the duration of use by forming it from a material having a degree of elastomeric property. In some embodiments, an additional layer of elastomer material is disposed on the interior surface of liner **502** to provide higher friction and better grip to the medicine bottle.

Smart bottle **500** enables the filling of medicine bottle **104** with content **102** prior to being placed into liner **502.** This affords such embodiments significant advantages, including:
∘ easier sanitization for reuse because contact between the medicine and the liner is avoided; and
∘ use with medicine bottles having a shape that does not lend itself to insertion of an inside liner, such as a medicine bottle having a body that is wider than its neck region, such as medicine bottle **504.**

It should be noted, however, that liner **502** can interfere with the visibility of information printed on a label that is often affixed to the outer surface of a medicine bottle. In some embodiments, therefore, the layout of electrodes **116** is arranged such that a region of medicine bottle **104** is left visible. In some embodiments, the printed label is placed on the receptacle instead of the medicine bottle. In some embodiments, receptacle **502** includes a substantially clear region that magnifies the surface of medicine bottle **104** when it is placed into the receptacle, thereby making it easier to read printed information on the medicine bottle.

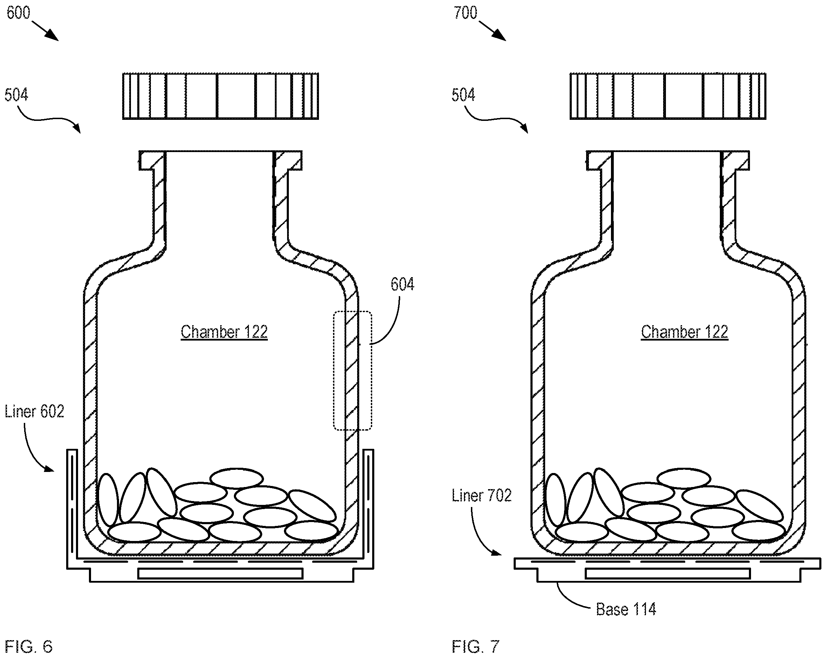

FIG. 6 depicts a schematic drawing of cross-sectional side view of a "smart" medicine bottle in accordance with a fourth alternative embodiment of the present invention. Smart bottle **600** is analogous to smart bottle **500;** however, liner **602** has a reduced height such that it surrounds only a lower portion of medicine bottle **504.** As a result, label portion **604,** located on the exterior surface of medicine bottle **504,** is exposed and readable by the patient, caregiver, *etc.*

FIG. 7 depicts a schematic drawing of cross-sectional side view of a "smart" medicine bottle in accordance with a fifth alternative embodiment of the present invention. Smart bottle **700** is analogous to smart bottle **500;** however, liner **702** includes only base **114,** upon which medicine bottle **504** rests.

It should be noted that even though each of the embodiments disclosed above comprise a liner that is distinct from the medicine bottle, in some embodiments, a liner is integrated with the medicine bottle to form a unitary body. In other words, in some embodiments, electrodes **116** and electronics **118** are integrated into the wall of the body of the medicine bottle. Although such embodiments benefit from the same features and capabilities of the liners described above, such integration would require a change to the manufacturing process of the medicine bottle to add the requisite process steps for fabrication. In some embodiments, a liner in accordance with the present invention is fused to the medicine bottle after each has been separately fabricated. By integrating the liner and the medicine bottle, the chain of custody of a medication is enabled, authentic and counterfeit medication can be differentiated, and theft is made more difficult.

## Claims

1. An apparatus for monitoring a content (102) of a chamber (122) of a medicine bottle (104), the apparatus comprising:
a liner (106) that comprises a first plurality of electrodes (116), the liner being dimensioned and arranged to locate the plurality of electrodes such that they are electrically coupled with the content of the chamber; and
electronic circuitry (118);
**characterized in that**:
the electronic circuitry is operative for (1) providing a stimulus (126) between a first electrode (116-*i*) and second electrode (116-*j*) of the first plurality thereof and (2) measuring a response (128) at each of a second plurality of electrodes, wherein the first plurality of electrodes includes the first electrode, second electrode, and the second plurality of electrodes, and wherein the second plurality of electrodes excludes the first electrode and second electrode.

2. The apparatus of claim 1 further comprising a processor (124) operative for developing an image of the content of the medicine bottle based on the measured responses at the second plurality of electrodes.

3. The apparatus of claim 1 wherein the stimulus is one of an electric current and a voltage, and wherein the response is the other one of an electric current and a voltage.

4. The apparatus of claim 1 wherein the stimulus is a first acoustic signal, and wherein the response is a second acoustic signal that is based on the first acoustic signal and the content.

5. The apparatus of claim 1 wherein the liner is dimensioned and arranged to fit within the medicine bottle such that the first plurality of electrodes are located within the chamber.

6. The apparatus of claim 5 wherein the liner includes a pedestal and a base, the pedestal projecting from the base, and the pedestal including at least one electrode of the first plurality thereof.

7. The apparatus of claim 1 wherein the liner (502) includes a reservoir (510) that is operative for locating the medicine bottle (504) such that the first plurality of electrodes are located outside the chamber.

8. A method for monitoring a content (102) of a chamber (122) of a medicine bottle (104), the method comprising:
generating a first stimulus (126) at a first time such that the stimulus interacts with the content;
receiving a first response (128) at each of a plurality of locations that are arranged around at least a portion of the chamber, wherein each first response of the plurality thereof is based on the first stimulus, the content of the chamber at the first time, and the location of the plurality thereof at which that first response is received;
generating a first map of a first characteristic of the content based on the plurality of first responses; and
determining a first quantity of the content within the chamber at the first time based on the first map;
**characterized in that**:
the first stimulus is generated between first and second electrodes of a first plurality of electrodes; and
each first response of the plurality thereof is received at each electrode of a second plurality of electrodes;
wherein the first plurality of electrodes includes the second plurality of electrodes; and
wherein the second plurality of electrodes excludes the first electrode and second electrode.

9. The method claim 8 further comprising:
generating a second stimulus (126) at a second time such that the second stimulus interacts with the content;
receiving a second response (128) at each of the plurality of locations, wherein each second response of the plurality thereof is based on the second stimulus, the content of the chamber at the second time, and the location of the plurality thereof at which that second response is received;
generating a second map of the first characteristic based on the plurality of second responses;
determining a second quantity of the content within the chamber at the second time based on the second map; and
providing an output signal (120) that indicates the difference between the first quantity and the second quantity.

10. The method of claim 8 wherein the first characteristic is selected from the group consisting of acoustic impedance and permittivity.

11. The method claim 8 wherein the first stimulus is an electric current and each of the plurality of first responses is a voltage.

12. The method of claim 8 further comprising providing a liner (502) that comprises a plurality of electrodes, each electrode of the plurality thereof being located at a different location of the plurality thereof.

13. The method of claim 12 wherein the liner (402) is provided such that it is located within the chamber.

14. The method of claim 13 wherein the liner is provided such that it includes a pedestal (304), the pedestal including at least one of the plurality of electrodes.

15. The method of claim 12 wherein the liner (402) is provided such that it includes a reservoir (510) that is operative for locating the medicine bottle.

## Patentansprüche

1. Vorrichtung zum Überwachen eines Inhalts (102) einer Kammer (122) eines Medikamentenbehälters (104), wobei die Vorrichtung umfasst:
eine Verkleidung (106), die eine erste Mehrzahl von Elektroden (116) umfasst, wobei die Verkleidung derart dimensioniert und angeordnet ist, dass die Mehrzahl von Elektroden so anordnet ist, dass sie mit dem Inhalt der Kammer elektrisch gekoppelt ist, und
elektronische Schaltungen (118),
**dadurch gekennzeichnet, dass**:
die elektronischen Schaltungen dazu dienen, (1) einen Stimulus (126) zwischen einer ersten Elektrode (116-i) und einer zweiten Elektrode (116-j) der ersten Mehrzahl selbiger bereitzustellen und (2) eine Reaktion (128) jeweils an einer zweiten Mehrzahl von Elektroden zu messen, wobei die erste Mehrzahl von Elektroden die erste Elektrode, die zweite Elektrode und die zweite Mehrzahl von Elektroden einschließt und wobei die zweite Mehrzahl von Elektroden die erste Elektrode und die zweite Elektrode ausschließt.

2. Vorrichtung nach Anspruch 1, ferner mit einem Prozessor (124), der dazu dient, anhand der an der zweiten Mehrzahl von Elektroden gemessenen Reaktionen ein Bild des Inhalts des Medikamentenbehälters zu entwickeln.

3. Vorrichtung nach Anspruch 1, wobei der Stimulus eines der Elemente elektrischer Strom oder Spannung ist und wobei die Reaktion das andere der Elemente elektrischer Strom oder Spannung darstellt.

4. Vorrichtung nach Anspruch 1, wobei der Stimulus ein erstes akustisches Signal ist und wobei die Reaktion ein zweites akustisches Signal ist, das auf dem ersten akustischen Signal und dem Inhalt basiert.

5. Vorrichtung nach Anspruch 1, wobei die Verkleidung derart dimensioniert und angeordnet ist, dass sie in den Medikamentenbehälter passt, so dass sich die erste Mehrzahl von Elektroden in der Kammer befindet.

6. Vorrichtung nach Anspruch 5, wobei die Verkleidung einen Sockel und einen Boden umfasst, wobei der Sockel von dem Boden vorsteht und wobei der Sockel mindestens eine Elektrode der ersten Mehrzahl selbiger umfasst.

7. Vorrichtung nach Anspruch 1, wobei die Verkleidung (502) einen Behälter (510) umfasst, der dazu dient, den Medikamentenbehälter (504) derart anzuordnen, dass sich die erste Mehrzahl von Elektroden außerhalb der Kammer befindet.

8. Verfahren zum Überwachen eines Inhalts (102) einer Kammer (122) eines Medikamentenbehälters (104), wobei das Verfahren umfasst:
Erzeugen eines ersten Stimulus (126) zu einem ersten Zeitpunkt, so dass der Stimulus mit dem Inhalt wechselwirkt
Empfangen einer ersten Reaktion (128) an jeweils einer Mehrzahl von Orten, die um zumindest einen Teil der Kammer herum angeordnet sind, wobei jede erste Reaktion der Mehrzahl selbiger auf dem ersten Stimulus, dem Inhalt der Kammer zu dem ersten Zeitpunkt und dem Ort der Mehrzahl von Orten, an dem diese erste Reaktion empfangen wird, basiert,
Erzeugen eines ersten Abbilds einer ersten Eigenschaft des Inhalts basierend auf der Mehrzahl von ersten Reaktionen und
Bestimmen einer ersten Menge des Inhalts in der Kammer zu dem ersten Zeitpunkt basierend auf dem ersten Abbild,
**dadurch gekennzeichnet, dass**:
der erste Stimulus zwischen der ersten und der zweiten Elektrode einer ersten Mehrzahl von Elektroden erzeugt wird und
an jeder Elektrode einer zweiten Mehrzahl von Elektroden eine jeweilige erste Reaktion der Mehrzahl selbiger empfangen wird,
wobei die erste Mehrzahl von Elektroden die zweite Mehrzahl von Elektroden einschließt und
wobei die zweite Mehrzahl von Elektroden die erste Elektrode und die zweite Elektrode ausschließt.

9. Verfahren nach Anspruch 8, ferner umfassend:
Erzeugen eines zweiten Stimulus (126) zu einem zweiten Zeitpunkt, so dass der zweite Stimulus mit dem Inhalt interagiert,
Empfangen einer zweiten Reaktion (128) an jedem der Mehrzahl von Orten, wobei jede zweite Reaktion der Mehrzahl selbiger auf dem zweiten Stimulus, dem Inhalt der Kammer zu dem zweiten Zeitpunkt und dem Ort der Mehrzahl von Orten, an dem diese zweite Reaktion empfangen wird, basiert,
Erzeugen eines zweiten Abbilds der ersten Eigenschaft basierend auf der Mehrzahl von zweiten Reaktionen,
Bestimmen einer zweiten Menge des Inhalts in der Kammer zu dem zweiten Zeitpunkt basierend auf dem zweiten Abbild und
Bereitstellen eines Ausgangssignals (120), das den Unterschied zwischen der ersten Menge und der zweiten Menge anzeigt.

10. Verfahren nach Anspruch 8, wobei die erste Eigenschaft ausgewählt wird aus der Gruppe bestehend aus akustischer Impedanz und Permittivität.

11. Verfahren nach Anspruch 8, wobei der erste Stimulus ein elektrischer Strom ist und die Mehrzahl von ersten Reaktionen jeweils eine Spannung darstellen.

12. Verfahren nach Anspruch 8, ferner umfassend das Bereitstellen einer Verkleidung (502), die eine Mehrzahl von Elektroden umfasst, wobei sich die Elektroden der Mehrzahl von Elektroden jeweils an einem anderen Ort der Mehrzahl von Orten befinden.

13. Verfahren nach Anspruch 12, wobei die Verkleidung (402) derart bereitgestellt wird, dass sie sich innerhalb der Kammer befindet.

14. Verfahren nach Anspruch 13, wobei die Verkleidung derart bereitgestellt wird, dass sie einen Socke! (304) umfasst, wobei der Sockel mindestens eine Elektrode der Mehrzahl von Elektroden enthält

15. Verfahren nach Anspruch 12, wobei die Verkleidung (402) derart bereitgestellt wird, dass sie einen Behälter (510) umfasst, der dazu dient, den Medikamentenbehälter darin anzuordnen.

## Revendications

1. Appareil pour surveiller un contenu (102) d'une chambre (122) d'une bouteille de médicament (104), l'appareil comprenant :
une chemise (06) qui comprend une première pluralité d'électrodes (116), la chemise étant dimensionnée et agencée pour positionner la pluralité d'électrodes de sorte qu'elles soient couplées électriquement au contenu de la chambre ; et
des éléments de circuit électronique (118) ;
**caractérisé en ce que** :
les éléments de circuit électronique sont utilisés pour (1) fournir un stimulus (126) entre une première électrode (116-i) et une deuxième électrode (116-j) de la première pluralité de celles-ci et (2) mesurer une réponse (128) au niveau de chacune d'une deuxième pluralité d'électrodes, dans lequel la première pluralité d'électrodes comprend la première électrode, la deuxième électrode, et la deuxième pluralité d'électrodes, et dans lequel la deuxième pluralité d'électrodes exclut la première électrode et la deuxième électrode.

2. Appareil selon la revendication 1 comprenant en outre un processeur (124) utilisé pour développer une image du contenu de la bouteille de médicament sur la base des réponses mesurées au niveau de la deuxième pluralité d'électrodes.

3. Appareil selon la revendication 1, dans lequel le stimulus est l'un d'un courant électrique et d'une tension, et dans lequel la réponse est l'autre d'un courant électrique et d'une tension.

4. Appareil selon la revendication 1, dans lequel le stimulus est un premier signal acoustique, et dans lequel la réponse est un deuxième signal acoustique qui est basé sur le premier signal acoustique et le contenu.

5. Appareil selon la revendication 1, dans lequel la chemise est dimensionnée et agencée pour s'insérer dans la bouteille de médicament de sorte que la première pluralité d'électrodes soient situées dans la chambre.

6. Appareil selon la revendication 5, dans lequel la chemise comprend un socle et une base, le socle faisant saillie de la base, et le socle comprenant au moins une électrode de la première pluralité de celles-ci.

7. Appareil selon la revendication 1, dans lequel la chemise (502) comprend un réservoir (510) qui est utilisé pour positionner la bouteille de médicament (504) de sorte que la première pluralité d'électrodes soient situées à l'extérieur de la chambre.

8. Procédé pour surveiller un contenu (102) d'une chambre (122) d'une bouteille de médicament (104), le procédé comprenant les étapes consistant à :
générer un premier stimulus (126) à un premier instant de sorte que le stimulus interagisse avec le contenu ;
recevoir une première réponse (128) au niveau de chacun d'une pluralité d'emplacements qui sont agencés autour d'au moins une partie de la chambre, dans lequel chaque première réponse de la pluralité de celles-ci est basée sur le premier stimulus, le contenu de la chambre au premier instant, et l'emplacement de la pluralité de ceux-ci auquel cette première réponse est reçue ;
générer une première carte d'une première caractéristique du contenu sur la base de la pluralité de premières réponses ; et
déterminer une première quantité du contenu dans la chambre au premier instant sur la base de la première carte ;
**caractérisé en ce que** :
le premier stimulus est généré entre des première et deuxième électrodes d'une première pluralité d'électrodes ; et
chaque première réponse de la pluralité de celles-ci est reçue au niveau de chaque électrode d'une deuxième pluralité d'électrodes ;
dans lequel la première pluralité d'électrodes comprend la deuxième pluralité d'électrodes ; et
dans lequel la deuxième pluralité d'électrodes exclut, la première électrode et la deuxième électrode.

9. Procédé selon la revendication 8 comprenant en outre les étapes consistant à :
générer un deuxième stimulus (126) à un deuxième instant de sorte que le deuxième stimulus interagisse avec le contenu ;
recevoir une deuxième réponse (128) au niveau de chacun de la pluralité d'emplacements, dans lequel chaque deuxième réponse de la pluralité de celles-ci est basée sur le deuxième stimulus, le contenu de la chambre au deuxième instant, et l'emplacement de la pluralité de ceux-ci auquel cette deuxième réponse est reçue ;
générer une deuxième carte de la première caractéristique sur la base de la pluralité de deuxièmes réponses ;
déterminer une deuxième quantité du contenu dans la chambre au deuxième instant sur la base de la deuxième carte ; et
fournir un signal de sortie (120) qui indique la différence entre la première quantité et la deuxième quantité.

10. Procédé selon la revendication 8, dans lequel la première caractéristique est sélectionnée dans le groupe consistant en une impédance acoustique et une permittivité.

11. Procédé selon la revendication 8, dans lequel le premier stimulus est un courant électrique et chacune de la pluralité de premières réponses est une tension.

12. Procédé selon la revendication 8 comprenant en outre l'étape consistant à fournir une chemise (502) qui comprend une pluralité d'électrodes, chaque électrode de la pluralité de celles-ci étant située à un emplacement différent de la pluralité de ceux-ci.

13. Procédé selon la revendication 12, dans lequel la chemise (402) est prévue de sorte qu'elle soit située dans la chambre.

14. Procédé selon la revendication 13, dans lequel la chemise est prévue de sorte qu'elle comprenne un socle (304), le socle comprenant au moins l'une de la pluralité d'électrodes.

15. Procédé selon la revendication 12, dans lequel la chemise (402) est prévue de sorte qu'elle comprenne un réservoir (510) qui est utilisé pour positionner la bouteille de médicament.
